(19) Europäisches Patentamt
European Patent Office
Office européen des brevets

(11) **EP 2 800 889 B1**

(12) **FASCICULE DE BREVET EUROPEEN**

(45) Date de publication et mention
de la délivrance du brevet:
**18.09.2019 Bulletin 2019/38**

(21) Numéro de dépôt: **12810339.7**

(22) Date de dépôt: **04.12.2012**

(51) Int Cl.:
*F02K 1/00* (2006.01)        *F02K 1/82* (2006.01)
*F02K 3/06* (2006.01)

(86) Numéro de dépôt international:
**PCT/FR2012/052795**

(87) Numéro de publication internationale:
**WO 2013/083908 (13.06.2013 Gazette 2013/24)**

(54) **TUYÈRE CONVERGENTE-DIVERGENTE DE TURBOMACHINE**

KONVERGENT DIVERGENT DÜSE EINER TURBOMASCHINE

CONVERGENT DIVERGENT NOZZLE FOR A TURBOMACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.12.2011 FR 1161282**

(43) Date de publication de la demande:
**12.11.2014 Bulletin 2014/46**

(73) Titulaire: **Safran Aircraft Engines
75015 Paris (FR)**

(72) Inventeurs:
• **LEYKO, Matthieu
F-77550 Moissy-cramayel Cedex (FR)**
• **BERTUCCHI, Jean
F-77550 Moissy-cramayel Cedex (FR)**
• **GAILLOT, Mathieu
F-77550 Moissy-cramayel Cedex (FR)**

(74) Mandataire: **Boura, Olivier et al
Cabinet Beau de Loménie
158, rue de l'Université
75340 Paris Cedex 07 (FR)**

(56) Documents cités:
EP-A1- 1 884 650     FR-A1- 2 217 559
FR-A1- 2 907 853     US-A- 4 802 629

## Description

### Arrière-plan de l'invention

La présente invention se rapporte au domaine général des tuyères de turbomachine. Elle vise plus précisément le profil géométrique de tuyères du type convergente-divergente.

Des domaines d'application de l'invention sont ceux des turboréacteurs à double flux et des turbopropulseurs d'aéronef.

De manière connue, une tuyère d'un turboréacteur à double flux comprend un corps central, un capot primaire disposé autour du corps central en lui étant coaxial de façon à délimiter avec celui-ci un canal primaire d'écoulement d'un flux chaud, et un capot secondaire disposé autour du capot primaire en lui étant coaxial de sorte à délimiter avec celui-ci un canal secondaire d'écoulement d'un flux froid. Lorsqu'elle est de type convergente-divergente, une telle tuyère présente une section transversale du canal primaire et/ou du canal secondaire qui se rétrécit vers l'aval pour s'élargir à son extrémité la plus en aval.

De même, une tuyère d'un turbopropulseur comprend un corps central et un capot annulaire disposé autour du corps central en lui étant coaxial de façon à délimiter avec celui-ci un canal annulaire d'écoulement d'un flux chaud issu du turbopropulseur. Lorsqu'elle est de type convergente-divergente, une telle tuyère présente une section transversale du canal qui se rétrécit vers l'aval pour s'élargir à son extrémité la plus en aval.

Ce type de tuyères convergente-divergente permet d'améliorer l'opérabilité des compresseurs alimentant les tuyères (par exemple la soufflante dans le cadre d'une tuyère de turboréacteur à double flux). En effet, pour la même section de col, une tuyère convergente-divergente permet d'obtenir un débit au décollage plus important qu'avec une tuyère simplement convergente.

Toutefois, le dessin d'une tuyère de type convergente-divergente est une opération délicate et compliquée ; une mauvaise conception de la forme géométrique des tuyères peut fortement dégrader les performances aérodynamiques de celles-ci sans pour autant présenter de gain sur l'opérabilité du moteur (c'est-à-dire sur le pilotage du débit de la tuyère entre deux points de fonctionnement de la turbomachine). Une tuyère convergente-divergente de turbomachine ayant les caractéristiques du préambule de la revendication 1 est connue du document FR 2 217 559 A1.

### Objet et résumé de l'invention

La présente invention a donc pour but principal de pallier de tels inconvénients en proposant une géométrie particulière d'une tuyère de type convergente-divergente qui permet d'augmenter les performances aérodynamiques de celles-ci tout en conservant son opérabilité.

Ce but est atteint grâce à une tuyère convergente-divergente de turbomachine, ayant les caractéristiques de la revendication 1.

Il a été constaté par la Demanderesse que, par rapport à une tuyère convergente-divergente de l'art antérieur, des courbures identiques (en valeur absolue) entre les courbes modélisant un profil externe de l'élément central (pouvant être par exemple le capot primaire d'un turboréacteur à double flux) et un profil interne du capot de la tuyère (pouvant être par exemple le capot secondaire d'un turboréacteur à double flux) ont pour conséquence d'améliorer sensiblement les performances aérodynamiques de la tuyère et l'opérabilité du moteur.

De préférence, en coupe longitudinale, les profils respectifs de l'élément central et du capot sont symétriques par rapport à un axe de symétrie.

Dans ce cas, l'axe de symétrie peut être incliné par rapport à un axe longitudinal de la turbomachine et former un angle compris entre 5° et 20° avec celui-ci.

L'invention a également pour objet un turboréacteur à double flux comprenant une tuyère convergente-divergente telle que définie précédemment.

L'invention a encore pour objet un turbopropulseur comprenant une tuyère convergente-divergente telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une demi vue schématique et en coupe longitudinale d'un turboréacteur à double flux équipé d'une tuyère selon l'invention ;
- la figure 2A est une loupe de la figure 1 montrant les profils respectifs des éléments constitutifs de la tuyère de la figure 1 ; et
- la figure 2B montre un exemple de réalisation des profils respectifs de la tuyère de la figure 2A.

### Description détaillée de l'invention

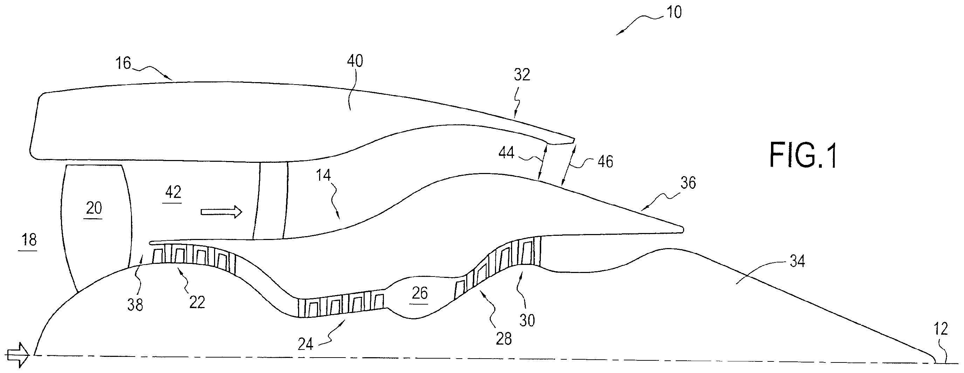

L'invention s'applique à toute tuyère de type convergente-divergente équipant une turbomachine, et notamment un turboréacteur à double flux 10 tel que celui représenté sur la figure 1.

Sur cette figure 1, le turboréacteur à double flux 10 possède un axe longitudinal 12 et se compose d'un moteur à turbine à gaz 14 et d'une nacelle annulaire 16 centrée sur l'axe 12 et disposée concentriquement autour du moteur.

D'amont en aval selon le sens d'écoulement d'un flux d'air traversant la turbomachine, le moteur 14 comprend une entrée d'air 18, une soufflante 20, un compresseur basse-pression 22, un compresseur haute-pression 24, une chambre de combustion 26, une turbine haute-pression 28 et une turbine basse-pression 30, chacun de ces éléments étant disposé selon l'axe longitudinal 12.

La tuyère 32 d'éjection des gaz produits par une telle turbomachine se compose d'un corps central annulaire 34 centré sur l'axe longitudinal 12 du turboréacteur, d'un capot primaire annulaire 36 entourant de façon coaxiale le corps central pour délimiter avec celui-ci un canal annulaire primaire 38, et d'un capot secondaire annulaire 40 entourant de façon coaxiale le capot primaire pour délimiter avec celui-ci un canal annulaire secondaire 42 coaxial au canal primaire (dans l'exemple de réalisation de la figure 1, la nacelle 16 du turboréacteur et le capot secondaire 40 de la tuyère sont une seule et même pièce).

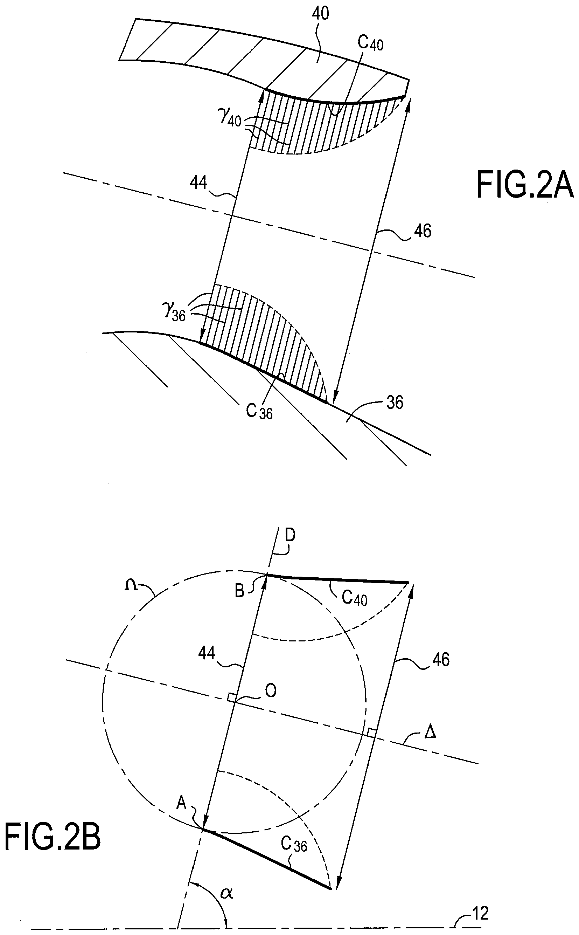

La tuyère 32 est du type convergente-divergente, c'est-à-dire qu'elle présente une section transversale du canal primaire 38 et/ou du canal secondaire 42 qui se rétrécit vers l'aval pour s'élargir à son extrémité la plus en aval. Dans l'exemple illustré sur les figures 1 et 2, il s'agit du canal secondaire 42 qui présente une section transversale se rétrécissant vers l'aval pour s'élargir à son extrémité aval.

Par ailleurs, pour la suite de la description, on définit la section de col 44 comme étant la section transversale minimale du canal secondaire 42 sur toute la longueur de la tuyère. De même, on définit la section d'éjection 46 comme étant la section transversale du canal secondaire qui est la plus en aval de la tuyère.

Selon l'invention, entre la section de col 44 et la section d'éjection 46 de la tuyère, le profil externe du capot primaire 36 et le profil interne du capot secondaire 40 présentent, en coupe longitudinale, des profils longitudinaux modélisés par des courbes $C_{36}$, $C_{40}$ dont les courbures respectives $\gamma_{36}$, $\gamma_{40}$ sont identiques en valeur absolue.

La figure 2A représente plus précisément la tuyère en vue en coupe selon un plan longitudinal (c'est-à-dire dans un plan contenant l'axe longitudinal du turboréacteur).

Sur cette figure 2A, le capot primaire 36 présente un profil externe qui peut être modélisé, entre la section de col 44 et la section d'éjection 46 de la tuyère, par une courbe $C_{36}$ pouvant prendre dans un repère orthonormé la forme d'une équation du type $y(x)$. Il en est de même pour la courbe $C_{40}$ modélisant le profil interne du capot secondaire 40.

Les courbures $\gamma_{36}$ et $\gamma_{40}$ respectives des courbes représentant en coupe longitudinale le profil externe du capot primaire et le profile interne du capot secondaire dans leur portion comprise entre la section de col et la section d'éjection sont obtenus par approximation de la dérivée seconde de l'ordonnée $y$ de ces courbes $C_{36}$, $C_{40}$ par rapport à la position axiale $x$ le long de cette courbe, soit :

$$\gamma \approx \frac{d^2 y}{dx^2}$$

Selon l'invention, ces courbures $\gamma_{36}$ et $\gamma_{40}$ sont identiques en valeur absolue (l'un étant positif et l'autre négatif).

La figure 2B représente un exemple de réalisation des profils respectifs des capots primaire et secondaire de la tuyère de la figure 2A respectant la condition d'identité de leurs courbures respectives $\gamma_{36}$ et $\gamma_{40}$.

Dans un premier temps, dans un plan longitudinal, on trace une droite D formant un angle $\alpha$ avec l'axe longitudinal 12 du turboréacteur, cet angle $\alpha$ étant un paramètre de design. A titre d'exemple, l'angle $\alpha$ est compris entre 75° et 80°.

L'intersection de la droite D avec le capotage interne du capot primaire 36 donne un point A. Un cercle $\Omega$ de centre O placé sur la droite D est ensuite tracé de sorte à être tangent au capotage interne du capot primaire 36 (passant donc par le point A). Le diamètre de ce cercle, ainsi que l'angle $\alpha$ sont choisis en fonction du taux de divergence de la tuyère requis pour l'opérabilité du moteur (par taux de divergence, on entend le rapport entre la section de col et la section d'éjection de la tuyère). Le point symétrique de A par rapport au point O est le point B situé sur le cercle $\Omega$.

Un axe de symétrie $\Delta$ est alors tracé, cet axe étant perpendiculaire à la droite D et passant par le point O. Le symétrique du profil interne $C_{36}$ du capot primaire 36 par rapport à cet axe de symétrie est alors dessiné pour former le profil interne $C_{40}$ du capot secondaire. De préférence, il existe donc une symétrie (en coupe longitudinale) des profils respectifs du capot primaire et du capot secondaire.

Par ailleurs, avec un angle $\alpha$ compris entre 75° et 80°, l'axe de symétrie $\Delta$ forme un angle compris entre 5° et 20° avec l'axe longitudinal 12 de la turbomachine.

Une fois les profils des capots primaire et secondaire ainsi dessinés dans le plan longitudinal représenté sur la figure 2B, on applique une révolution autour de l'axe longitudinal 12 du turboréacteur pour obtenir ces mêmes profils sur 360°.

Dans l'exemple décrit précédemment, la tuyère est du type convergente-divergente au niveau du canal secondaire. Bien entendu, elle pourrait alternativement l'être au niveau du canal primaire auquel cas la condition d'identité des courbures s'appliquerait aux profils du corps central et du capot primaire situé en regard de celui-ci.

**Revendications**

1. Tuyère convergente-divergente de turbomachine, comprenant un élément central (36) et un capot annulaire (40) disposé autour de l'élément central en lui étant coaxial de façon à délimiter avec celui-ci un canal annulaire (42) d'écoulement d'un flux gazeux issu de la turbomachine, où, entre une section de col (44) qui est la section transversale minimale du canal annulaire d'écoulement du flux gazeux et une section d'éjection (46) de la tuyère qui est la section transversale la plus en aval de la tuyère, un profile externe de l'élément central et un profil interne du capot présentent, en coupe longitudinale, des profils longitudinaux modélisés par des courbes différentes ($C_{36}$, $C_{40}$), la tuyère étant **caractérisée en ce que** les courbures respectives ($\gamma_{36}$, $\gamma_{40}$) desdites courbes différentes obtenues par approximation de la dérivée seconde de l'ordonnée *y* de ces courbes *y(x)* par rapport à la position axiale *x* sont identiques en valeur absolue.

2. Tuyère selon la revendication 1, dans laquelle, en coupe longitudinale, les profils respectifs du corps central et du capot sont sensiblement symétriques par rapport à un axe de symétrie.

3. Tuyère selon la revendication 2, dans laquelle l'axe de symétrie est incliné par rapport à un axe longitudinal (12) de la turbomachine et forme un angle compris entre 5° et 20° avec celui-ci.

4. Turboréacteur à double flux comprenant une tuyère convergente-divergente selon l'une quelconque des revendications 1 à 3.

5. Turbopropulseur comprenant une tuyère convergente-divergente selon l'une quelconque des revendications 1 à 3.

**Patentansprüche**

1. Konvergent-divergente Düse einer Turbomaschine, umfassend ein mittleres Element (36) und eine ringförmige Verkleidung (40), die um das mittlere Element koaxial hierzu verlaufend angeordnet ist, um mit diesem einen ringförmigen Kanal (42) für das Strömen eines aus der Turbomaschine stammenden Gasstroms zu begrenzen, wobei zwischen einem Halsquerschnitt (44), welcher der minimale Querschnitt des ringförmigen Kanals für das Strömen des Gasstroms ist, und einem Ausstoßquerschnitt (46) der Düse, welcher der am weitesten stromabwärts befindliche Querschnitt der Düse ist, ein Außenprofil des mittleren Elements und ein Innenprofil der Verkleidung im Längsschnitt Längsprofile aufweisen, die durch unterschiedliche Kurven ($C_{36}$, $C_{40}$) modelliert sind, wobei die Düse **dadurch gekennzeichnet ist, dass** die jeweiligen Krümmungen ($\gamma_{36}$, $\gamma_{40}$) der unterschiedlichen Kurven, die durch Approximation der zweiten Ableitung der Ordinate *y* dieser Kurven *y(x)* in Bezug auf die axiale Position x erhalten werden, hinsichtlich des Absolutwertes identisch sind.

2. Düse nach Anspruch 1, bei der die jeweiligen Profile des mittleren Körpers und der Verkleidung im Längsschnitt im Wesentlichen symmetrisch zu einer Symmetrieachse sind.

3. Düse nach Anspruch 2, bei der die Symmetrieachse gegenüber einer Längsachse (12) der Turbomaschine geneigt ist und mit dieser einen Winkel zwischen 5° und 20° bildet.

4. Zweistrom-Turbostrahltriebwerk, umfassend eine konvergent-divergente Düse nach einem der Ansprüche 1 bis 3.

5. Turboprop-Triebwerk, umfassend eine konvergent-divergente Düse nach einem der Ansprüche 1 bis 3.

**Claims**

1. A turbine engine convergent-divergent nozzle comprising an central element (36) and an annular cap (40) arranged coaxially around the central element so as to define therewith an annular flow channel (42) for a gas stream issued from the turbine engine, wherein between a throat section (44) which is the minimum cross section of the gas stream annular flow channel and an ejection section (46) of the nozzle which is the cross section the furthest downstream of the nozzle, an external profile of the central element and an internal profile of the cap present in longitudinal section longitudinal profiles that are modeled by distinct curves ($C_{36}$, $C_{40}$), the nozzle being **characterized in that** respective curvatures ($\gamma_{36}$, $\gamma_{40}$) of said distinct curves that are obtained by approximation of the second derivative of the ordinate y of these curves y(x) with respect to the axial position x are identical in absolute value.

2. A nozzle according to claim 1, wherein the respective profiles in longitudinal section of the central element and of the cap are symmetrical about an axis of symmetry.

3. A nozzle according to claim 2, wherein the axis of symmetry is inclined relative to a longitudinal axis (12) of the turbine engine and forms an angle therewith lying in the range 5° to 20°.

4. A bypass turbojet including a convergent-divergent nozzle according to any one of claims 1 to 3.

5. A turboprop including a convergent-divergent nozzle according to any one of claims 1 to 3.

FIG.1

EP 2 800 889 B1

FIG.2A

FIG.2B

**RÉFÉRENCES CITÉES DANS LA DESCRIPTION**

**Documents brevets cités dans la description**

- FR 2217559 A1